Europäisches Patentamt

**European Patent Office**

**Office européen des brevets**

(11) Publication number: **0 227 319**
**A2**

(12) **EUROPEAN PATENT APPLICATION**

(21) Application number: **86309238.3**

(22) Date of filing: **26.11.86**

(51) Int. Cl.⁴: **G 06 F 9/38**

(30) Priority: **26.12.85 US 813674**

(43) Date of publication of application:
**01.07.87 Bulletin 87/27**

(84) Designated Contracting States:
**DE FR GB NL**

(71) Applicant: **Analog Devices, Inc.**
**Route 1, Industrial Park P.O. Box 280**
**Norwood Massachusetts 02062(US)**

(72) Inventor: **Rosegen, John P.**
**138 Randall Street**
**Easton Massachusetts(US)**

(72) Inventor: **Wilson, James**
**295 S. Walpole Street**
**Sharon Massachusetts(US)**

(74) Representative: **Warren, Anthony Robert et al,**
**BARON & WARREN 18 South End Kensington**
**London W8 5BU(GB)**

(54) **Instruction cache memory.**

(57) A processor (100) that is optimized for digital signal processing is provided with separate, external program and data memories (102 and 112 respectively) so that the next instruction to be executed can be fetched from the program memory (102) during the same machine cycle in which a data word is retrieved from the data memory (112). A portion of the program memory (102) is also used to store data so that two data words can be retrieved during the same machine cycle. A cache memory (230) located on the processor chip stores a small number of previously-executed instructions so that the next instruction can be fetched from the cache memory (230) during machine cycles in which data words are fetched from both the program and data memories (102, 112). If all instructions for a program loop can be stored in the cache memory (230), each machine cycle in the loop can be used to fetch two data words from the external memories (102, 112), thus effectively increasing processor speed to the equivalent of a three-external-memory system.

FIG. 1

FIG. 2

-1-

## INSTRUCTION CACHE MEMORY

This invention relates to digital data processors capable of operating with separate program and data memories and to digital data processors which are optimized for digital signal processing.

Digital signal processing is a computational area which is become increasingly important in the communications and data processing fields. At first, digital signal processing utilized custom-designed logic circuits which performed digital multiplication and division at high speeds. However, with the advent of the very large scale integration circuit fabrication techniques, fast digital multipliers have been combined with arithmetic logic units, program sequencers and memories to form a complete digital signal processing system on a single chip of silicon.

Conventionally, digital signal processing systems have included some or all of the system memory on the same integrated circuit chip that houses the processing circuitry. These conventional processing circuits work well in applications in

-2-

which the program and data storage requirements do not exceed the capacity of the internal memory. A problem with these conventional circuits is that with existing semiconductor technology, the amount of memory that can be included on a single chip (without seriously compromising the processing capability) is severely limited and, if the internal memory capacity is exceeded, generally such conventional circuits suffer severe processing speed reductions.

In view of this limitation, other processing circuits have been developed in which the memory is located external to the processor chip. Since access to external memory generally takes longer than access to internal memories, several different memory arrangements have been used to minimize the memory access time of such circuits. A typical device utilizing external memory construction has two separate memories, each of which has its own address generating logic. With such a system, one memory is used to store a set of program instructions while the other memory is used to store data. Since each memory has its own address generating circuit, both memories can be accessed during the same machine cycle, allowing a data word and the next instruction word to be fetched. Thus, such devices have a processing speed which is much higher than devices in which a single memory is used to store both program instructions and data.

However, even such two-memory systems cannot process information fast enough for some applications. More particularly, many data processing circuits require two data words as input for a single processing operation. For example, multiplication and addition both require two inputs which are then combined to produce a single output. Therefore, in two-memory systems the processing circuits must halt processing for one machine cycle while the second data word is being fetched from data memory (one memory must be devoted to generating processing instructions during each machine cycle).

To avoid this delay in processing, some processing system have used three external memories all of which can be accessed simultaneously on each machine cycle. In such systems, during a single machine cycle, the system can fetch two data words and the next processing instruction so that a three-memory system can operate at maximum processing speed.

A problem with a three-external-memory system is that the electrical connections required between the three external memories (each of which requires address and data leads) and the processor necessitates that the integrated circuit chip which houses the processor have many connector pins (often

-4-

over a hundred). To maintain electrical reliability, the distance between separate connector pins cannot be reduced less than a minimum distance and thus the physical packages which house such processors are often large. Similarly, the large number of connections which must be made between the chip and the connector pins often leads to reliability problems.

Accordingly, it is an object of the present invention to provide a digital signal processing system which can operate at the speed of a three-external-memory system for many applications.

It is another object of the present invention to provide a digital signal processing system which can operate at the speed of a three-external-memory system but has only the number of connector pins required for a two-memory system.

It is a further object of the present invention to provide a digital signal processing system which is designed to access external memories efficiently.

It is yet another object of the present invention to provide a digital signal processing system which has both high processing speed and high processing performance.

It is still a further object of the present invention to provide a digital signal processing system which can access two separate external memories, one of which contains data and one of which contains both program instructions and data.

The foregoing objects are achieved and the foregoing problems are solved in one illustrative embodiment of the invention in which a digital signal processor includes a small cache memory for storing instructions which memory is located on the processor chip. The cache memory stores a small subset of the instructions which have been recently-executed in the processing unit.

Many time-critical computations can be written as program loops in which all of the loop instructions can be stored in the cache memory. During the first pass through such a program loop the loop instructions are stored in the cache memory and two machine cycles are required to fetch two data words for processing and the next instruction. However, on all subsequent passes through the instruction loop, the next instruction can be fetched from the cache memory thus allowing the address generation circuitry to fetch a data word from both the data memory and the program memory. Accordingly, the processor performance under such looping conditions is equivalent to that of a three-external-memory system.

More particularly, the cache memory is an internal memory which holds a small number of instruction words. If a currently-executing instruction does not require a data word transfer from the program memory, the next instruction word which is fetched from the program memory is automatically written into the cache memory at the same time that it is loaded into the instruction register. Alternatively, if the currently executing instruction does require a program memory data transfer, the instruction register is loaded from the cache memory instead of from the program memory.

In the latter case, the instruction loaded from the cache memory may not be valid because the cache memory contents can only be used if the instruction is one of a set of contiguous instructions stored in the cache memory. (thus, if the currently-executing program instruction causes a jump to an address not available in the cache memory then the entire cache memory contents must be invalidated). A cache memory monitor circuit tracks the instruction address range of the instructions currently stored in the cache memory and makes a determination as to whether the instruction loaded into the instruction register is valid. If it is not, the instruction register is cleared and the program memory address generating circuitry is halted so that a program memory fetch can be instituted on the next machine cycle using the same program memory address to obtain the next actual instruction.

The cache memory monitor circuit maintains a count of the number of contiguous instructions stored in the cache memory that occur after the currently-executing instruction and a separate count for the number of contiguous instructions stored in the cache memory that occur before the currently-executing instruction. To determine that the next instruction is among the instructions currently stored in the cache memory, the address of the currently-executing instruction is subtracted from the address of the next instruction to generate an offset number. By appropriately subtracting and adding the offset number to the stored count information, the monitor circuit determines whether the offset falls within the range of instructions already stored in the cache memory.

In order that the invention may be more readily understood, reference will now be made to the accompanying drawings, in which:-

Figure 1 is a simplified block schematic diagram of the data processing system embodying the present invention showing the basic interconnections between the processor, the program memory, the data memory and system peripherals.

Figure 2 of the drawing is a block schematic diagram of the instruction processing portion of the illustrative processor showing the connections between the cache memory and the cache memory monitor unit.

Figure 3 of the drawing is a expanded block schematic diagram of the cache memory monitor unit.

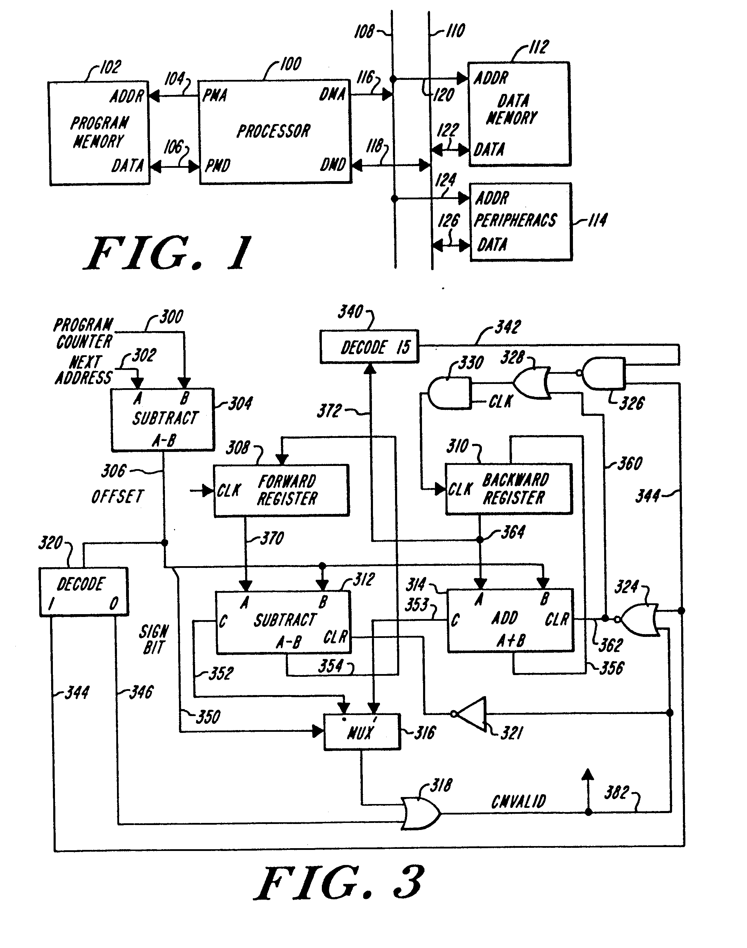

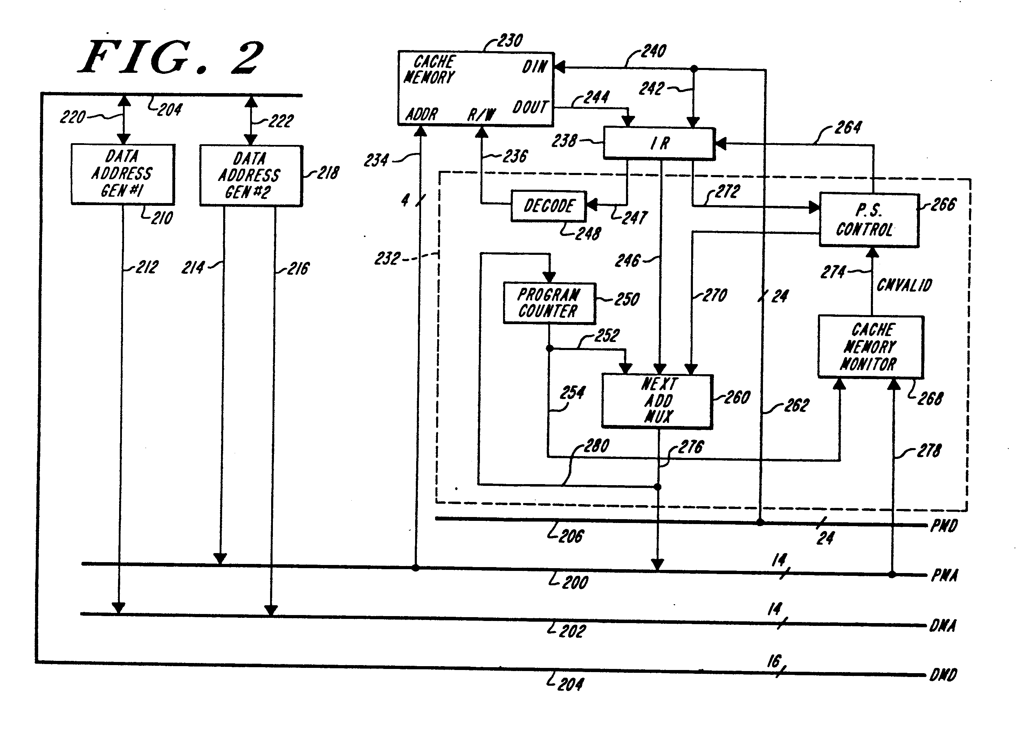

The basic block diagram of the illustrative digital signal processing system is shown in Figure 1. Processor unit 100 contains digital processing circuits which perform the actual data manipulations. It may, for example, contain an arithmetic logic unit (ALU) which performs additions, subtractions, logical combinations and other conventional data manipulations. Processor unit 100 may also contain high-speed digital multiplier units and a data shifter for data rotation, scaling and normalization. Such computational units are conventional and well-known to those skilled in the art and, accordingly, will not be discussed in detail further herein.

Processor 100 communicates with two external memories, 102 and 112 and peripheral unit 114 by means of a plurality of buses. Although each bus is indicated as a single line in the figures, in accordance with conventional practice, the buses may actual consist of a multiple-wire buses in which the logical bits of a digital word are transferred in parallel between processor 100 and its associated external devices.

In particular, processor 100 can fetch program instruction words stored in program memory 102 by generating a plurality of address signals at its program memory address output, PMA, which signals are forwarded, via bus 104, to the address inputs of program memory 102. In addition, in accordance with the invention, data words may also be fetched from memory 102 by processor 100 by providing a data address over bus 104 to memory 102. Instruction and data words to be transferred between program memory 102 and processor 100 are transferred between the data output of memory 102 and the program memory data (PMD) of processor 100 over bus 106.

Processor 100 may also access data memory 112 and peripheral units indicated schematically as block 114. Data memory 112 and peripheral units 114 are connected to processor 100 by means of an address bus 108 and a data bus 110. In order to access data memory 112, processor 100 generates a multi-bit address at its data memory address (DMA) port which address is transferred, via bus 116, to address bus 108 and from there, via bus 120, to the address port of data memory 112. Data which is fetched from, or transferred to, memory 112 is transferred, via bus 122, between memory 112 and data bus 110 and from there, via bus 118, to the data memory data (DMD) port of processor 100.

In a similar manner, address information on bus 108 can be provided, via bus 124, to the address inputs of peripheral unit 114. Data returning from peripheral 114 can be provided, via buses 126, 110 and 118, to the DMD port of processor 100.

As previously mentioned, processor 100 generally operates as a two-memory system. Thus, during each memory cycle, a data word is transferred to or from

-10-

data memory 112 and the next program instruction is fetched from program memory 102. However, in accordance with the invention, as previously described, program memory 102 can also be used to store a portion of the data. The decision as to whether to fetch data words or instructions words from memory 102 is determined by the operation code of the instruction which is currently-executing in processor 100.

Figure 2 is an expanded block schematic diagram of the circuitry of processor 100 which generates address information for both the data and program memories. As previously mentioned, processor 100 communicates with the program and data memories by means of four ports (the PMA, PMD, DMA and DMD ports). The PMA, PMD, DMA and DMD ports are attached to internal buses 200, 206, 202, and 204, respectively which connect the ports to the address generating circuitry.

Data address signals on bus 202 are generated by one of data address generators 210 and 218. Data address generator 210 is a conventional circuit which, under control of the processor sequencing logic (not shown), generates a fourteen-bit address signal which is used to access a particular location in data memory 112. The address signals generated by generator 210 are provided, via bus 212, to the data memory address bus 202.

-11-

Similarly, data address generator 218 can generate a fourteen-bit address signal which is provided to data memory address bus 202 by means of bus 216 for accessing data in data memory 112. However, in accordance with invention, instead of generating an address signal on bus 216, data address generator 218 can generate another fourteen-bit address signal and, via bus 214, provide it to the program memory address bus 200 for accessing data located in program memory 102. Generators 210 and 218 can operate simultaneously and thus the system can access both the program memory and the data memory in the same machine cycle to obtain two data words.

Incoming data words from data memory 112 are provided, via the DMD port, to internal data bus 204. Data may be loaded into data address generators 210 and 218 by means of buses 220 and 222, respectively, in order to preset the data address generators to desired addresses. The data information on bus 204 is also used by the remaining computational units (ALU, multiplier and shifter units, not shown in Figure 2) which have been previously mentioned.

During normal processing operations, address information for the program memory is generated by the instruction register 238 and program sequencer logic 232. More particularly, program memory addresses may be generated either sequentially by means of program counter 250 or by a portion of the instruction contained in instruction register 238 (for example, a "jump" instruction). Accordingly, the output of program counter 250 is provided via, bus 252, to next address multiplexer 260. Similarly, the address output portion of the instruction register is provided, via bus 246, to next address multiplexer 260. Whether the next address is to be selected from the program counter or the output of the instruction register is controlled, via bus 270, by the program sequencer control 266. Program counter 250, next address multiplexer 260, instruction register 238 and program sequencer control circuitry 266 are conventional and well-known circuits and their detailed operation will not be described further hereinafter.

The address information selected by next address multiplexer 260 is provided, via its output bus 276, to the program memory address bus 200 and, from there, to the PMA port. The address information may also be provided, via bus 280 and multiplexer 283 to the program counter to preset it to the next address. As with multiplexer 260, multiplexer 283 is controlled by program sequence control circuit 266.

The next instruction selected by the address signals is provided, via the program memory data bus, to the PMD port and the next instruction appears on internal bus 206 where it is forwarded, via buses 262 and 242, to instruction register 238. At the beginning of a machine cycle, the next instruction is latched into instruction register 238 under control of program sequencer 266 and the instruction currently in the program register determines the operation of the processor for the next machine cycle in the normal manner. Address information appearing at the output of next address multiplexer 260 may also be provided, via bus 282, to program counter 250 to preset it to the next address.

Accordingly, during ordinary machine cycle operation, a program memory address is generated from either program counter 250 or instruction register 238 and forwarded to program memory 102. Similarly, a data memory address is generated by either generator 210 or 218 and forwarded to data memory 112. In response to the address signals, each of the respective memories transfers data which, in the case of the program memory, is the next instruction and, in the case of the data memory, is data for processing during the current machine cycle or is data that has been processed and must be stored.

-14-

In accordance with the invention, a cache memory 230 is also provided in processor 100. Cache memory 230 is a small memory array which holds a plurality of instruction words. Illustratively, memory array 230 may store up to 16 24-bit instruction words. The function of the cache memory is to store the last 16 instructions which have been executed by the processor so that the stored instructions can be used to run the processor when the program enters a short loop.

Accordingly, instructions fetched from the program memory are written into cache memory 230 at the same time they are loaded into instruction register 238. In particular, instruction words which are provided, via internal bus 206 to instruction register 238 are also provided, over bus 240, to the data input port of cache memory 230. Cache memory 230 receives a portion of the address signals on program memory address bus 200, via bus 234. More particularly, the address information received by cache memory 230 is the four least-significant bits of the program memory address. Thus, the cache memory address is equal to the program memory address, taken modulo-16 and each program memory address will always correspond to one cache memory address.

The read/write (R/W) control line of memory array 230 is driven by decoding circuit 248 which decodes the operation code portion of the currently-executing instruction loaded into instruction register 238 (received over bus 247). If the currently-executing instruction does not perform a program memory data transfer then cache memory 230 will be controlled to perform a "write" operation and, thus, the next instruction fetched from the program memory will be stored in cache memory 230 at the same time as it is loaded into instruction register 238. Alternatively, if the currently-executing instruction does perform a program memory data transfer, cache memory 230 will go into a "read" state and instruction register 238 will be loaded with the next instruction from cache memory 230 via bus 244. In addition, the output of the next address multiplexer 260 is disabled and address generator 218 is enabled to generate a data address on program memory address bus 200 for transferring a data word from program memory 102 to the processing system.

Since the loading of the instruction register from cache memory 230 during a program memory data transfer takes place automatically (as controlled by the operation code of the currently-executing instruction), it is possible that the next instruction loaded into register 238 from cache memory 230 is invalid. That is, the next desired instruction may not be stored in cache memory 230,

-16-

but instead must be fetched from the external program memory.

If the next instruction is not stored in the cache memory, then an incorrect instruction will be loaded into instruction register 238. In order to prevent this incorrect instruction from being executed, cache memory monitor circuit 268 determines whether the instruction is valid and generates a command valid (CMVALID) signal on lead 274 which is provided to the program sequencer control unit 266. If the CMVALID signal indicates that an instruction transferred from cache memory 230 to instruction register 238 is invalid, then program sequencer control 266 generates a signal on its output lead 264 which causes instruction register 238 to be cleared to all logical "0"s which is a "no operation" (NOP) command. Thus, during the current machine cycle, no operation will be performed by the remainder of the processing circuitry. In addition, in the case of an invalid command, sequencer control 266 halts the operation of program counter 250 and controls multiplexer 260, via lead 270, to maintain the current instruction address at its output 276. During the next machine cycle, multiplexer 260 is enabled to generate an address on bus 200 and a program memory access is performed with the current address and the correct instruction is fetched from the program memory 102.

Figure 3 shows a detailed block diagram of the construction of cache memory monitor circuit 268. The function of the cache memory monitor circuitry is to keep track of the program memory address range currently stored in the cache memory so that it can be determined whether a given instruction is stored in memory 230. The range of instructions stored in memory 230 is contained in forward register 308 and backward register 310. Forward register 308 is a four-bit register which contains a number equivalent to the number of contiguous instructions stored in cache memory 230 that occur in the executing program after the currently-executing instruction. Similarly, backward register 310 is a four-bit register which contains a number equivalent to the number of contiguous instructions stored in cache memory 230 that occur in the program previous to the currently-executing instruction. During each machine cycle, the circuitry shown in Figure 3 operates to update the forward and backward registers and to determine if the next requested instruction is stored in memory 230.

In particular, to determine whether the next instruction is valid or invalid, the address of the currently-executing instruction (as indicated by the program counter output) is obtained from program counter 250, via bus 300, is subtracted from the next instruction address generated by the next address multiplexer 260 and provided to circuit 268 on bus 302. The difference between the two addresses is a "offset" number (a fourteen-bit number plus an algebraic sign bit) which indicates the number of instructions between the presently-executing instruction and the next instruction in the program sequence. This offset number is generated on output bus 306 and provided to both four-bit subtract circuit 312 and four-bit add circuit 314.

Subtract circuit 312 receives the four-bit output of forward register 308, via lead 370, and subtracts the four least-significant bits of the offset number on lead 306 from the four-bit contents of forward register 370. The remaining ten bits (including the sign bit) of the relative address signal are Ored together with the carry from the four-bit addition to generate a subtract carry signal on output 352. If the algebraic sign of the offset number on bus 306 is positive (indicating a forward branch in the program) then a subtract carry output on lead 352 from subtract circuit 312 indicates whether the desired instruction is stored in the cache memory. More particularly, a "high" signal on lead 352 indicating a carry produced by subtract circuit 312 indicates that the forward branch instruction has not taken the program to an address which is greater than the address range stored in memory 230 and, accordingly, the instruction has previously been stored in memory 230. Alternatively, a "low" output on lead 352 indicates that the forward branch instruction is outside the range of instructions stored in register 230 and thus the desired instruction is not currently located in the memory.

Similarly, add circuit 314 receives the four-bit output of backward register 310, via lead 364, and adds the four least-significant bits of the 14-bit offset number appearing on lead 306. As with subtract circuit 213, the ten remaining bits of the offset number are Ored together with the carry output from the four-bit adder to generate an add carry output at output 353. If the algebraic sign of the offset number on bus 30 is negative (indicating a backward branch instruction) then an add carry output from adder circuit 314 indicates that the desired instruction is stored in memory 230. More specifically, a "high" signal on the output 353 of adder circuit 314 indicates that the desired instruction is stored in memory 230. A "low" signal on output lead 353 indicates that the desired instruction is not stored in cache memory 230.

Accordingly, the sign bit of the offset number on bus 306 (the most significant bit) is used to select the appropriate carry output from either subtract circuit 312 or add circuit 314 for use as the CMVALID signal which indicates whether the cache memory contains the next instruction.

More particularly, the sign bit of the offset number on bus 306 is provided, via lead 350, to the select input of multiplexer 316. One input of multiplexer 316 is connected to the carry output of subtract circuit 312 and the other input of multiplexer 316 is connected to the carry output of add circuit 314. Thus, the appropriate carry output is provided to the upper input of OR gate 318. The output of OR gate 318 is the CMVALID signal. The lower input of OR gate 318 is connected to decoding circuit 320. Circuit 320 generates a "high" at its "0" output when the next instruction address is equal to the address of the presently-executing instruction (a "zero" offset condition). In this case, obviously the next instruction address is stored in memory 230, since the next instruction is the same as the currently-executing instruction, but the carry bit arrangement discussed above does not operate properly. Consequently, the "high" signal at the output of decode circuit 320 is used to force the CMVALID signal "high" by means of OR gate 318.

As previously mentioned, when the current instruction performs a program memory data transfer, the CMVALID signal is used by the program sequencing logic to determine if an instruction fetch cycle must be performed on the next machine cycle. A "true" or "high" state on the CMVALID signal line causes the program sequencing logic not to perform the following instruction fetch cycle.

After the next instruction is loaded into the instruction register from the cache memory and is determined to be valid or invalid as discussed above, the monitor circuit registers must be updated to include the next instruction in the range of instructions stored in the cache memory or to invalidate the cache memory contents if the instruction was determined to be invalid. Control of the transfer from subtract circuit 312 and add circuit 314 to the forward register 308 or the backward register 310, respectively, is necessary because, although sixteen instructions are stored in the cache memory at all times, not all of the instructions will be available for transfer into the instruction register.

More particularly, instructions in the cache memory are only valid if they are contiguous with the instruction which is currently-executing, thus, if the program takes a jump to a location not available from cache memory, then, not only will the instruction have to be fetched from the external program memory, but the entire cache memory contents will have to be invalidated because the old instructions are no longer contiguous with the new one. After such a jump, the number of valid instructions in the cache memory will then increase again until the cache memory fills or until the program takes another out-of-cache jump.

Due to the modulo-sixteen nature of the cache memory addressing, once the cache memory fills, newly-fetched instructions overwrite the oldest previously-fetched instructions.

To control the transfer of the subtract circuit and add circuit to the forward and backward register, the four-bit output of subtract circuit 312 is also provided, via bus 354, to the input of forward register 308. Similarly, the four-bit output of add circuit 314 is provided to the input of backward register 310. At the beginning of the each machine cycle, if the next instruction was determined to be valid (as indicated by a "high" or "true" signal on the CMVALID lead), a clock signal is provided to registers 308 and 310 (indirectly) causing them to be loaded with the output of subtract circuit 312 and add circuit 314, respectively.

However, a "false" or "low" state on the CMVALID signal line 382 is provided to inverter 321 causing a "high" signal to be applied to the "clear" input of subtract circuit 312. The "high" signal at clear input of subtract circuit 312 forces its outputs to logical zero and the zero output is provided, via bus 354, to the inputs of forward register 308. Thus, during the next machine cycle, forward register 308 is cleared when the zeros at its input are shifted into the register.

Backward register 310 is only cleared if the current instruction is invalid and is a "jump" instruction. More particularly, the "low" CMVALID signal generated on lead 382 if the current instruction is invalid is provided to the lower input of NOR gate 324. The upper input of NOR gate 324 is connected, via lead 344 to the "1" output of decoder circuit 320.

As previously mentioned, decoder circuit 320 decodes the offset address on bus 306 to produce two outputs. A "high" signal on the "0" output indicates that the next instruction address is equal to the current instruction address and a "high" signal on the "1" output indicates that the next instruction address corresponds to the next sequential instruction in the program. Consequently, if the "1" output of decode circuit 320 is "low" indicating that the next instruction is not the next sequential instruction (that is that the next instruction is "jump"), the "low" signal on lead 344 is provided to the upper input of NOR gate 324. In response to the "low" signal at both its inputs, NOR gate 324 generates a "high" signal on its output lead 362, which signal forces the outputs

-24-

of adder 314 to logical "0".

Similarly, the "high" output of gate 324 on lead 360 is applied to the lower input of OR gate 328. In response thereto, OR gate 328 applies a "high" signal to the upper input of AND gate 330, enabling it. Thus, during the next machine cycle, a clock signal applied to the lower input of AND gate 330 passes through gate 330 and clocks backward register 310 causing it to be cleared by the zero output of adder 314.

If the CMVALID signal is "true", then generally the backward register is loaded with the output of adder 314. A clock signal is applied to register 310 via AND gate 330 which is normally enabled by a "high" signal generated by OR gate 328. However, clock pulses are prevented from reaching register 310 if register 310 has reached its maximum capacity (15). More particularly, the outputs of register 310 on bus 364 are provided, via bus 372, to decoder circuitry 340. Decoder circuitry 340 generates a "high" output on its lead 342 when the output of register 310 reaches a maximum value of 15 (the register output is limited to sixteen values, 0-15). The "high" output signal on lead 342 is applied to the upper input of NAND gate 326 causing it to apply a "low" signal to OR gate 328. Assuming OR gate 328 receives a "low" signal on its lower input (backward register 310 is not being cleared),

-25-

it applies a "low" signal to the upper input of AND gate 330 disabling it and preventing the backward register 310 from being clocked beyond its maximum state.

In addition, register 310 will not be clocked if the next instruction is sequential as indicated by a "high" output on the "1" output of decoder 320.

Two examples of instructions (the set of instruction in each example contains an instruction that fetches data from the program memory) are given below. The illustrative sets contain instructions labelled A-F which sets of instructions may be parts of program loops of which additional instructions are not shown. In both examples, instruction C causes data to be transferred to or from the program memory. The remaining instructions may perform a variety of other functions, the exact nature of which is not important. The first of these examples, shown in Table I, assumes that the program is proceeding through the loop for the first time and thus the instructions have not previously been stored in cache memory. Table I documents the program memory activity, the cache memory operation and the internal operations performed during each machine cycle.

-26-

## TABLE I

| Cycle # | Program Mem. Op. | Cache Memory oper. | Internal oper. |
|---|---|---|---|
| . | . | . | . |
| . | . | . | . |
| N | Fetch Inst. B | Store Inst. B | Execute Inst. A |
| N+1 | Fetch Inst. C | Store Inst. C | Execute Inst. B |
| N+2 | Data Transfer | Fetch Invalid Inst. | Execute Inst. C |
| N+3 | Fetch Inst. D | Store Inst. D | Do nothing |
| N+4 | Fetch Inst. E | Store Inst. E | Execute Inst. D |
| N+5 | Fetch Inst. F | Store Inst. F | Execute Inst. E |
| . | . | . | . |
| . | . | . | . |
| . | . | . | . |

In Table I it can be seen that during machine cycle N+2 program step C is executed which causes data to be transferred from the program memory. As previously mentioned, a decoder circuit responsive to the operation code of such an instruction causes the cache memory to enter a "read" state which, in turn, causes an instruction which is stored in cache memory to be transferred to the instruction register.  However, since it is assumed that the actual program has not previously been stored in cache, this instruction may be invalid.  Thus, during machine cycle N+3, the correct instruction, D, must be fetched from program memory.  During this cycle no other action can be performed by the processor since no valid instruction is in the instruction register.

The second illustrative example shows the operation of the system with the same program after the program has gone through a loop so that the program steps have been stored in the cache memory.

-28-

## TABLE II

| Cycle # | Program Mem. Op. | Cache Memory oper. | Internal oper . |
|---------|------------------|--------------------|-----------------|
| . | . | . | . |
| . | . | . | . |
| . | . | . | . |
| N | Fetch Inst. B | Store Inst. B | Execute Inst.A |
| N+1 | Fetch Inst. C | Store Inst. C | Execute Inst.B |
| N+2 | Data Transfer | Fetch Inst. D | Execute Inst.C |
| N+3 | Fetch Inst. E | Store Inst. E | Execute Inst.D |
| N+4 | Fetch Inst. F | Store Inst. F | Execute Inst.E. |
| . | . | . | . |
| . | . | . | . |
| . | . | . | . |

As in the previous example, during machine cycle
N+2, program step C is executed which causes data to
be transferred from the program memory and an
instruction to be automatically fetched from cache
memory. However, since it is now assumed that the
program has previously been stored in cache, this
latter instruction will be valid. Consequently,
during machine cycle N+3, the correct instruction, D, is already in the instruction register and can be executed. Thus, the "extra" cycle, N+3, which was used to fetch instruction D in the previous example can be used to execute another instruction with the result that the same program takes one less machine cycle to execute.

CLAIMS

1. Digital signal processing apparatus for processing data during a plurality of machine cycles, the processing apparatus having a first memory, a second memory, an instruction register for holding an instruction to be executed, circuitry controlled by an instruction word in the register for fetching a new instruction word from the first memory during a machine cycle, and circuitry responsive to the instruction word in the register for fetching a data word from the second memory during the same machine cycle, CHARACTERIZED IN THAT a third memory is provided to store selected instruction words fetched from the first memory so that, under control of a selected instruction word in the instruction register, a data word can be fetched from the second memory and a new instruction word can be fetched from the third memory during the same machine cycle.

2. Digital signal processing apparatus according to Claim 1 FURTHER CHARACTERIZED IN THAT the third memory is only large enough to store a subset of the instruction words stored in the first memory.

3. Digital signal processing apparatus according to any of Claims 1 or 2 FURTHER CHARACTERIZED IN THAT circuitry is provided to generate instruction address information under control of
an instruction word in the instruction register
and the third memory receives as an address a
portion of the instruction address information.

4.  Digital signal processing apparatus according to
    Claim 3 FURTHER CHARACTERIZED IN THAT circuitry
    is provided which is responsive to the
    instruction address information for generating a
    valid signal when an instruction word
    corresponding to the instruction address
    information is stored in the third memory.

5.  Digital signal processing apparatus according to
    Claim 4 FURTHER CHARACTERIZED IN THAT circuitry
    is provided which is responsive to the valid
    signal for loading an instruction word which
    causes no processing operations to take place
    into the instruction register when the valid
    signal indicates that no instruction word
    corresponding to the instruction address
    information is stored in the third memory.

6.  Digital signal processing apparatus according to
    Claim 4 FURTHER CHARACTERIZED IN THAT circuitry
    is provided which is controlled by the valid
    signal to cause the instruction address
    generating circuitry to repeat the same address information during the next machine cycle when the valid signal indicates that no instruction word corresponding to the instruction address information is stored in the third memory.

7. Digital signal processing apparatus according to any of Claims 1 to 6 FURTHER CHARACTERIZED IN THAT circuitry is provided to fetch a data word from the first memory during the same machine cycle in which an instruction word is fetched from the third memory and another data word is fetched from the second memory.

8. Digital signal processing apparatus according to Claim 1 FURTHER CHARACTERIZED IN THAT circuitry is provided which is responsive to selected instruction words in the instruction register for generating data address information and circuitry is provided which is responsive to the data address information for transferring a data word between the second memory and the digital signal processing apparatus.

9. Digital signal processing apparatus according to any of Claims 1 to 8 FURTHER CHARACTERIZED IN THAT the third memory is a cache memory and circuitry is provided to load an instruction word fetched from the first memory into the cache memory concurrently with the loading of the instruction into the instruction register.

10. Digital signal processing apparatus according to Claim 9 FURTHER CHARCTERIZED IN THAT circuitry is provided which generates instruction address information and further circuitry is provided which generates cache memory address signals which are a subset of the least significant bits of the instruction address information.

11. Digital signal processing apparatus according to Claim 10 FURTHER CHARACTERIZED IN THAT further circuitry is provided for determining an offset number indicating the number of instructions between the next instruction and the currently executing instruction and for determining a range of addresses corresponding to instructions stored in the cache memory, and additional circuitry is provided for generating a valid signal if the offset number lies within the range of addresses.

12. Digital signal processing apparatus according to Claim 11 FURTHER CHARACTERIZED IN THAT circuitry is provided which is responsive to the valid signal for recalculating the address range information to include the next instruction.

13. Digital signal processing apparatus according to any of Claims 1 to 12 FURTHER CHARACTERIZED IN THAT the first memory is a program memory.

14. Digital signal processing apparatus according to any of Claims 1 to 13 FURTHER CHARACTERIZED IN THAT the second memory is a data memory.

FIG. 1

FIG. 3

**FIG. 2**

0227319